# EUROPÄISCHE PATENTANMELDUNG

(11) **EP 3 327 405 A1**
(43) Veröffentlichungstag der Anmeldung: **30.05.2018**
(21) Anmeldenummer: 16201107.6
(22) Anmeldetag: 29.11.2016
(51) Int. Cl.: G01D 5/26, G01B 11/14, F01D 21/00, G01S 17/88

(54) **FASEROPTISCHE SENSORVORRICHTUNG**

(71) Anmelder: Siemens Aktiengesellschaft, 80333 München (DE)
(72) Erfinder: Tidona, Fausto, 45131 Essen (DE)

(57) **Zusammenfassung**

Die Erfindung betrifft eine faseroptische Sensorvorrichtung (70), beispielsweise zum berührungslosen Messen von Abständen und Vorbeiflugzeiten, mit einer Sendeanordnung und einer Empfangsanordnung. Die Sendeanordnung umfasst einen ersten Sender zum Aussenden mindestens eines ersten Lichtsignals, wobei der erste Sender mindestens eine Sendefaser (72) aufweist. Die Empfangsanordnung umfasst mindestens N Empfänger, wobei jeder der N Empfänger mindestens eine Empfangsfaser (73, 74, 75, 76) aufweist, in einer anderen Entfernung zu dem ersten Sender angeordnet ist als die jeweils übrigen N-1 Empfänger und dazu eingerichtet ist, ein jeweils zugehöriges von N bei Reflexion des mindestens einen ersten Lichtsignals an einem Messobjekt entstehenden ersten reflektierten Lichtsignalen zu empfangen. Es ist vorgesehen, dass N mindestens 3 ist.

## Beschreibung

Die Erfindung betrifft eine faseroptische Sensorvorrichtung, beispielsweise zum berührungslosen Bestimmen von Abständen zu Messobjekten, insbesondere auch zum Bestimmen von Abständen und Vorbeiflugzeiten, beispielsweise von Schaufelblättern bei Gasturbinen oder Rotoren.

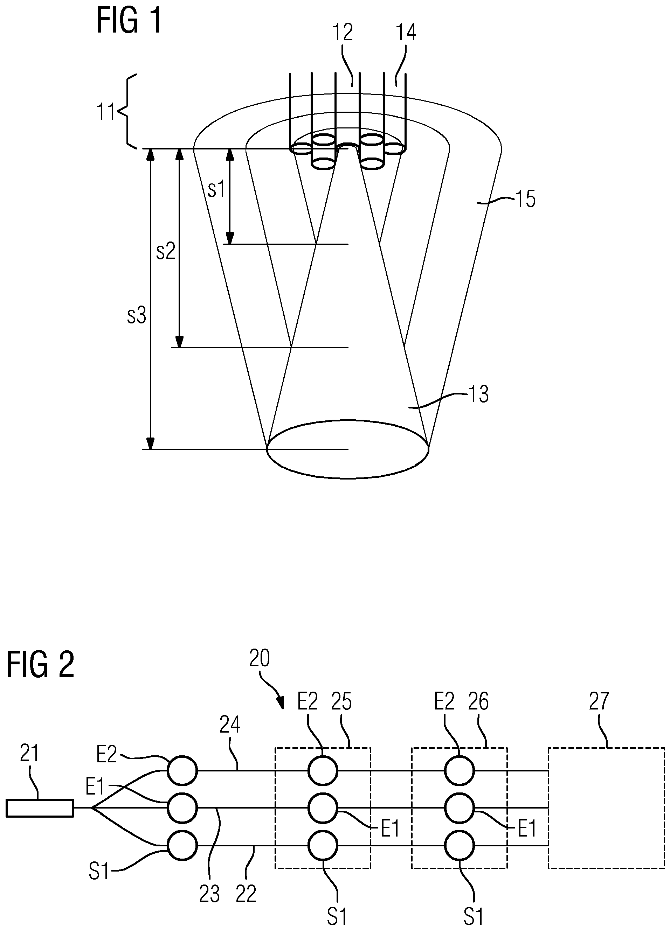

Faseroptische Sensoren können zur berührungsfreien Messung nach dem Streulichtverfahren verwendet werden, um Abstände zwischen einer Oberfläche eines Messobjekts oder Targets und dem Sensor zu bestimmen. Dabei wird ein Lichtwellenleiter mit einer Lichtquelle, beispielsweise einem Laser, verbunden und strahlt Licht in Richtung einer reflektiven Oberfläche eines Objekts ab. Das von der Oberfläche des Objekts reflektierte Licht wird zumindest teilweise von mindestens einer Empfangsfaser wieder empfangen und beispielsweise anhand der Intensität bzw. Streuung des empfangenen Lichts auf die Entfernung zum reflektierenden Messobjekt zurückgeschlossen. Wie in Fig. 1 schematisch gezeigt, werden Sende- und Empfangsfasern zu einer Sonde bzw. einem Sondenkörper 11 zusammengefasst. Die Sendefaser 12 strahlt einen Sendestrahl 13 in Richtung einer Oberfläche des Messobjektes (nicht gezeigt) ab. Mit zunehmender Entfernung zum Objekt vergrößert sich der Durchmesser des Sendestrahls zu einem Kegel. Die Empfangsfasern 14 empfangen einen Teil des Kegels des am Messobjekt reflektierten Lichts. Je näher das Objekt ist, desto geringer ist der Durchmesser des kegelförmigen reflektierten Empfangsstrahls 15 und desto höher ist die Intensität des empfangenen Lichts. Wird in Fig. 1 das Licht bereits in der Entfernung s1 reflektiert, empfangen die Empfangsfasern 15 Licht höherer Intensität als im Abstand s2 oder s3.

Sind beispielsweise die Betriebstemperaturen bei der Messung besonders hoch und/oder vollzieht das Messobjekt beispielsweise eine Rotationsbewegung, ist eine berührungslose Messung wie sie durch die Verwendung eines faseroptischen Sensors ermöglicht wird, besonders vorteilhaft. Sie eignet sich beispielsweise für eine Abstandsmessung oder Clearance-Messung an kontinuerlichen oder unterbrochenen Umfangflächen eines rotierenden oder statischen Gegenstands oder an dessen kontinuierlichen oder unterbrochenen Stirnflächen und prinzipiell für eine Abstandsmessung an beliebigen bewegten oder statischen Flächen.

Beispielsweise eignet sich ein faseroptischer Sensor für eine Kopfspiel (TC - Tip Clearance) - Messung, um beispielsweise bei Gasturbinen den Abstand zwischen den Spitzen der Schaufelblätter und dem Gehäuse zu überwachen. Ebenso eignet sie sich zur berührungslosen Messung von Vorbeiflugzeiten (BTT - Blade Tip Timing) der Schaufeln. Hierbei wird die Ankunftszeit der Schaufel im Bereich des faseroptischen Sensors erfasst und über die Veränderungen der Zeitabstände der Ankunftszeiten der verschiedenen Schaufeln auf deren aktuelle Abstandsveränderung zueinander und damit die Schwingung der Schaufelblätter zurückgeschlossen. Faseroptischen Sensoren zur Erfassung der Vorbeiflugzeiten sind von ihrem Prinzip her ebenfalls faseroptische Abstandssensoren, wobei deren Abstandsinformation aber ggf. ignoriert bleibt und nur bei Eintritt der Schaufel in den Messbereich die entsprechende Vorbeiflugzeit ermittelt wird.

Allerdings wird die Qualität der Messung mit faseroptischen Abstandssensoren durch eine Vielzahl von Faktoren beeinflusst, beispielsweise durch die Reflektivität der Oberfläche des Messobjekts oder Targets als eine Funktion der Lichtwellenlänge, durch die numerische Apertur der Senderfaser meist als eine schwache Funktion der Lichtwellenlänge, durch die numerische Apertur der Empfängerfaser meist als eine schwache Funktion der Lichtwellenlänge, durch den Brechungsindex des Messraums zwischen Sensor und Messobjekt meist als eine schwache Funktion der Lichtwellenlänge, durch den Brechungsindex des Senders meist als eine schwache Funktion der Lichtwellenlänge, durch den Brechungsindex des Empfängers meist als eine schwache Funktion der Lichtwellenlänge, durch die Oberflächengüte des Messobjekts, durch die Transmissionsgüte des Senders als eine Funktion der Lichtwellenlänge, durch die Transmissionsgüte des Empfängers als eine Funktion der Lichtwellenlänge, durch die Lichtwellenlänge und Lichtwellenlängenschwankungen der Lichtquelle, durch die Intensität und Intensitätsschwankungen der Lichtquelle, durch die Winkelverteilung und Schwankungen der Winkelverteilung durch die Lichtquelle, oft eine Funktion der Lichtwellenlänge der Gesamtintensität und der Lichtwellenlänge, durch Sensitivität und Sensitivitätsschwankungen und andere Störungen am opto-elektronischen Wandler, der verwendet wird, um aus dem empfangenen reflektierten Licht ein entsprechendes elektrisches Empfangssignal zu erzeugen, ggf. als eine Funktion der Lichtwellenlänge, durch Schwankungen und Ungenauigkeiten der Messwerterfassung, durch Mängel bei der Ankopplung der Lichtquelle an die Sendefaser, durch Mängel bei der Ankopplung des jeweiligen Empfängers an den opto-elektronischen Wandler, durch eine mit steigendem Abstand stark sinkende Signalqualität, durch den Winkel zwischen Sonde und Target, also den Grad der Orthogonalität der Sonde zur reflektierenden Oberfläche und durch die Ausrichtung der Sonde bzw. des Sondenkörpers mit den Sende- und Empfangsfasern zum Messobjekt (Verdrehung der Sonde, unabhängig von der Orthogonalität der Sonde zur messenden Oberfläche).

Daher ist bei faseroptischen Abstandssensoren der verwendbare Messbereich entweder sehr klein oder es werden eine sehr große Anzahl von Lichtwellenleitern eingesetzt, da durch die Verwendung einer großen Anzahl von Lichtwellenleitern die geringere Signalqualität teilweise kompensiert und ein vergrößerter Messbereich ermöglicht werden kann.

Dies ist jedoch nicht immer ausreichend beziehungsweise möglich. Insbesondere wenn die Sensoren im Hochtemperaturbereich, beispielsweise in einer Gasturbine, eingesetzt werden sollen, stellen die Kosten für geeignete Lichtwellenleiter einen wesentlichen Faktor da. Die Kosten für Lichtwellenleiter im Hochtemperaturbereich wirken sich erheblich auf die Gesamtkosten der Anwendung aus, so dass eine Steigerung der Anzahl der Lichtwellenleiter nur sehr begrenzt erfolgen kann. Teilweise ist auch aus baulichen Gründen eine komplexe Verlegung von Sende- und Empfangsfasern mit meist geringen Leitungsdurchmessern erforderlich, so dass dies ebenso eine Steigerung der Anzahl der Lichtwellenleiter begrenzt. Gleichzeitig sind die erforderlichen Messbereiche meist durch die thermisch-transienten Betriebssituationen größer als bei Anwendungen mit geringeren maximalen Temperaturen. Zudem kann sich die Oberflächenbeschaffenheit des Messobjekts bzw. Targets während des Betriebes ändern, so dass von unterschiedlichen Reflexionsgraden und Färbungen der zu messenden Oberflächen ausgegangen werden muss. Zusätzlich kann sich auch die Oberflächenbeschaffenheit der Lichtwellenleiter eventuell während des Betriebes ändern, so dass von unterschiedlichen Transmissionsgraden ausgegangen werden muss. Hinzu kann unter Umständen auch eine Änderung des Brechungsindexes im Messraum während des Betriebes kommen.

Die beschriebenen faseroptischen Sensoren zur Streulichtmessung sind prinzipiell folgendermaßen aufgebaut: Wie in Fig. 2 gezeigt, weist eine faseroptische Sensorvorrichtung 20 einen Sondenkörper 21 als Messaufnehmer auf, in dem die Sendefaser 22 des Senders S1 und mindestens die Faser oder Fasern 23 eines ersten Empfängers E1 zusammengeführt sind. In einer Variante dieses Aufbaus kann ein zweiter Empfänger E2 mit zweiten Empfangsfasern 24 vorgesehen sein. Ein messtechnischer Anschluss 25 verbindet die Sendefaser mit einer Lichtquelle (nicht gezeigt), beispielsweise einer Laserlichtquelle, und ggf. mit einer Wandlungseinheit 26, meist einem opto-elektronischen Wandler, der die Lichtsignale in korrespondierende elektrische oder elektronische Signale umwandelt, die dann von einer Auswerteeinheit 27, beispielsweise einem Computer, ausgewertet werden.

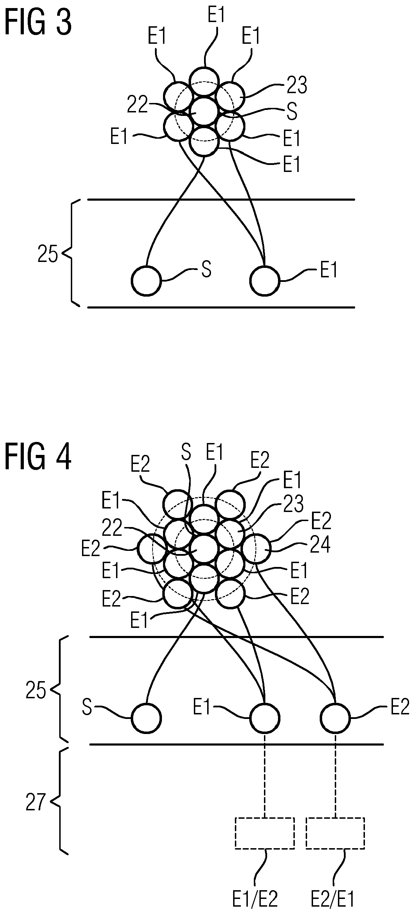

Dabei ist der Sondenkörper beispielsweise aufgebaut wie in Fig. 3 und 4 gezeigt. Fig. 3 zeigt einen schematischen Querschnitt durch einen Sondenkörper mit einem eine Sendefaser 22 umfassenden Sendekanal bzw. Sender S und einem sechs Empfangsfasern 23 umfassenden Empfangskanal bzw. Empfänger E1, wobei die Empfangsfasern 23 kreisförmig um die Sendefaser 22 angeordnet sind und der messtechnische Anschluss 25 jeweils einen Anschluss für den Sender und den Empfänger vorsieht. Fig. 4 zeigt den gleichen Aufbau wie Fig. 3, zusätzlich erweitert um auf einem weiteren Kreis angeordnete zweite Empfangsfasern 24 eines zweiten Empfängers E2, wobei der messtechnische Anschluss 25 nun auch einen Anschluss für den zweiten Empfänger E2 vorsieht. Durch die Aufnahme von zwei verschiedenen Empfangssignalen ist es nun möglich, ein Relativsignal bzw. Relativempfangssignal E1/E2 zu bestimmen (sowie das reziproke Signal E2/E1), wobei der Term "E1/E2" beispielsweise für ein Relativempfangssignal steht, bei dem für jeden Abstand der Wert des dem Empfänger E1 zugeordneten Empfangssignals durch den Wert des dem Empfänger E2 zugeordneten Empfangssignals geteilt wird.

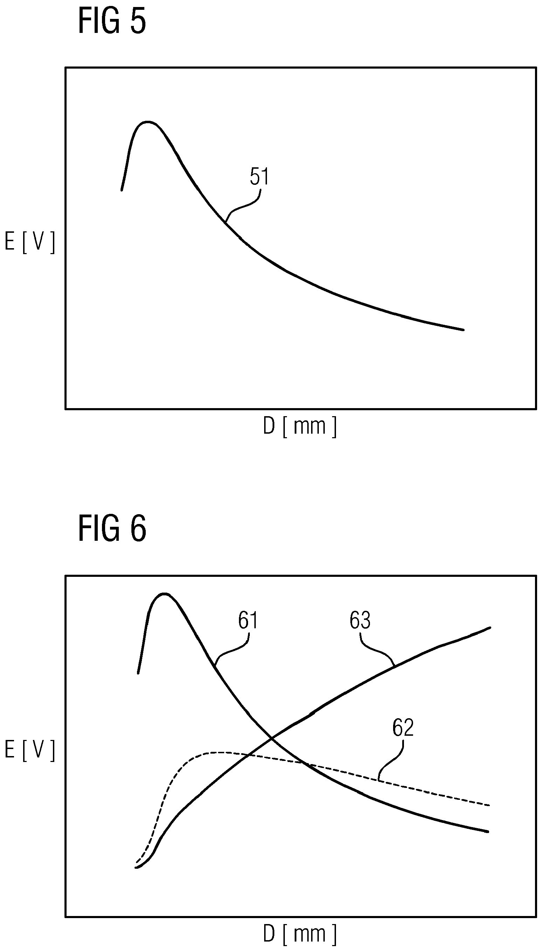

Das am Empfänger E1 der Fig. 3 bzw. den Empfängern E1 und E2 der Fig. 4 jeweils empfangene Signal verhält sich als Funktion der Entfernung bzw. des Abstands zum Messobjekt dabei entsprechend der in Fig. 5 bzw. Fig. 6 gezeigten Funktionen 51, 61, 62. Der in Fig. 5 in einem Diagramm, in dem für gemessene Abstände bzw. Distanzen D Empfangssignalpegel E angegeben sind, gezeigte Funktionsverlauf 51 eines Empfangssignals wird beispielsweise mit faseroptischen Sensoren entsprechend dem in Fig. 3 gezeigten Prinzip erzielt. Derartige Sensoren werden beispielsweise von der Firma Philtec, Inc. hergestellt, vergleiche Datenblatt Fiberoptic Sensor Model D240, März 2014.

In Fig. 6 wird in einem Diagramm, in dem für gemessene Abstände bzw. Distanzen D Empfangssignalpegel E angegeben sind, zusätzlich der aus E1/E2 bestimmte Verlauf des Relativempfangssignals 63 gezeigt. Der Verlauf ist linearisiert gegenüber den einzelnen Empfangssignalen und ist, wie in Garcia et al, "An Optical Fiber Bundle Sensor for Tip Clearance and Tip Timing Measurements in a Turbine Rig", Sensors 2013, 13, 7385-7398; doi:10.3390/s130607385 oder auch in Cao et al, "Measurement of Rotating Blade Tip Clearance with Fibre-Optic Probe", Journal of Physics: Conference Series 48 (2006) 873-877, gezeigt, theoretisch, d.h. unter Idealbedingungen, nun unabhängig von der Reflektivität des Messobjektes. Allerdings wird durch die Verwendung eines zweiten Empfängers zwar eine zumindest teilweise Kompensation des Reflexionsgrades des Messobjekts ermöglicht, aber es wird wiederum die Anzahl der eingesetzten Lichtwellenleiter erhöht, meist mindestens verdoppelt. Derartige reflexionskompensierte faseroptische Abstandssensoren werden von der Firma Philtec, Inc., hergestellt, vergleiche Datenblatt Fiberoptic Sensor Model RC290, Juli 2015. Diese besitzen aber nahezu doppelt so viele Lichtwellenleiter wie die nicht reflexionskompensierten Varianten und können nur in einer bestimmten Ausrichtung eingebaut werden. Die Sensoren mit dem größten Messbereich sind dabei am empfindlichsten bezüglich des Winkels zwischen Sondenkörper und Messobjekt und benötigen des Weiteren die meisten Empfangsfasern zur Erweiterung des Messbereichs. Oftmals werden derartige Sensoren nur mit festverbauten Lichtquellen vertrieben, um die Kalibrierung nicht zu gefährden.

Die bekannten faseroptischen Abstandssensoren bieten einen geringen Messbereich, der nur durch die Ausstattung des Empfängers mit sehr vielen Empfängerfasern etwas erweitert werden kann. Insbesondere im Hochtemperatur-Einsatz mit den entsprechend teuren Lichtwellenleitern als Sende- und Empfangsfasern sind derartige Sensoren daher sehr teuer. Preiswertere Sensoren sind dagegen in der Regel für einen niedrigeren Temperaturbereich ausgelegt und so beispielsweise nicht für den Einsatz bei Verbrennungskraftmaschinen wie Gasturbinen geeignet. Zudem ist ein Einsatz an komplex zu erreichenden Messstellen aufgrund der wegen der hohen Anzahl an Lichtwellenleitern dicken Leitungen und ggf. der festverbauten Lichtquelle nur schwer realisierbar.

Zudem liegt ein Nachteil faseroptischer Abstandssensoren darin, dass sie sehr anfällig gegen Veränderungen der Parameter des Messaufbaus und des Messobjekts sind. Beispielsweise kann sich die Intensität der Lichtquelle oder Reflektivität des Messobjekts mit der Zeit oder auch bei unterschiedlichen Temperaturen verändern. Die Sensoren nach dem Stand der Technik gehen davon aus, dass die Abhängigkeit des Messergebnisses von derlei Effekten durch die Berechnung eines Relativsignals aus zwei unterschiedlich reflektierten empfangenen Lichtsignalen vollständig kompensiert werden kann.

Ein Problem ist also, dass das Messergebnis bei der Verwendung von faseroptischen Abstandssensoren von so vielen Einflussfaktoren abhängt, dass diese Kompensation nur unvollständig beziehungsweise immer nur dann akzeptabel funktioniert, wenn möglichst viele der Einflussfaktoren konstant gehalten werden können, ein derartiger Sensor also nur für sehr speziell eingerichtete Aufbauten und kleine Messbereiche hinreichend gute Ergebnisse liefern kann. Muss der Messbereich vergrößert werden, ist dies nur durch die Verwendung von Empfängern mit wesentlich mehr Empfangsfasern möglich, was wiederum die Kosten des Sensors stark erhöht.

Es ist daher eine Aufgabe der vorliegenden Erfindung, eine faseroptische Sensorvorrichtung zur Verfügung zu stellen, die auch bei suboptimalen Parameterwerten des Messaufbaus und des Messobjekts eine Optimierung des Messbereichs ermöglicht und dabei auch eine Kostenoptimierung zulässt.

Diese Aufgabe wird durch den Gegenstand des unabhängigen Anspruchs 1 gelöst. Bevorzugte Ausgestaltungen und Weiterbildungen der Erfindung ergeben sich aus den abhängigen Ansprüchen.

Es ist vorgesehen, dass eine faseroptische Sensorvorrichtung zumindest eine Sendeanordnung und eine Empfangsanordnung umfasst. Die Sendeanordnung umfasst dabei einen ersten Sender zum Aussenden mindestens eines ersten Lichtsignals, wobei der erste Sender mindestens eine Sendefaser aufweist. Die Empfangsanordnung umfasst mindestens N Empfänger, wobei N eine natürliche Zahl ist und jeder der N Empfänger mindestens eine Empfangsfaser aufweist, in einer anderen Entfernung zu dem ersten Sender angeordnet ist als die jeweils übrigen N-1 Empfänger und dazu eingerichtet ist, ein jeweils zugehöriges von N bei Reflexion des mindestens einen ersten Lichtsignals an einem Messobjekt entstehenden ersten reflektierten Lichtsignalen zu empfangen. Erfindungsgemäß ist dabei vorgesehen, dass N mindestens 3 ist.

Es ist also vorgesehen, eine Empfangsanordnung zu verwenden, die eine Vielzahl, mindestens jedoch drei Empfänger umfasst, die jeweils in einer anderen Entfernung zum Sender angeordnet sind. Auf diese Weise kann durch geeignete Auswahl der Entfernungen der gewünschte Messbereich festgelegt werden. Ein kleiner verwendbarer Messbereich kann mit geringen Kosten stark vergrößert werden, denn die Anzahl der eingesetzten Lichtwellenleiter kann im Vergleich zum erreichten Messbereich gering gehalten werden. Zur Messbereichserweiterung muss nicht die Anzahl der Empfangsfasern im selben Ausmaß erhöht werden wie bei der Verwendung von nur einem oder zwei Empfängern, da eine größere Degradation der Empfangssignale akzeptabel ist, da eine nun verfügbare erhöhte Anzahl von voneinander unabhängigen Empfangssignalen die Bestimmung von nicht nur einem, sondern einer Mehrzahl, für N=3 mindestens zwei, Relativempfangssignalen ermöglicht, deren gemeinsame Auswertung weniger hohe Anforderungen an die Exaktheit jedes einzelnen gemessenen Empfangssignals stellt. Durch die Auswertung der Vielzahl von Empfangssignalen beziehungsweise daraus erzeugbaren Relativempfangssignale kann also die veränderliche Reflektivität des Targets oder Messobjekts besser kompensiert werden, ebenso Schwankungen der Lichtquelle. Auch eine suboptimale Ankopplung der Lichtquelle an die Sendefaser kann durch die mehrfachen Empfängersignale kompensiert werden. Insgesamt können mehrfach kompensierte Signale die Aussagesicherheit der Messung und damit die Messgenauigkeit erhöhen. Vorzugsweise ist N so groß, dass die Anzahl der erforderlichen Empfangsfasern für die geplante Anwendung noch mit vertretbaren Kosten realisiert werden kann, aber möglichst viele, beispielsweise N-1, Relativempfangssignale erzeugt werden können.

Insbesondere im Hochtemperaturbereich ist es vorteilhaft, dass der größere Messbereich durch die größere Anzahl an Empfängern besser an die thermisch-transienten Betriebssituationen angepasst werden kann. Zudem wird durch eine hohe Anzahl an kompensierten Signalen, also Relativempfangssignalen, die sich ändernde Oberflächenbeschaffenheit des Messobjekts bzw. Targets berücksichtigt und auch durch die Möglichkeit der Erzeugung von redundanten, linear unabhängigen Relativempfangsignalen eine Steigerung der Aussagesicherheit der Messung und damit auch eine Steigerung der Messgenauigkeit erzielt. Die Oberflächenbeschaffenheit der Sendefasern kann, wie bei allen kompensierten Varianten, vernachlässigt werden, insofern eine Messfähigkeit bestehen bleibt.

Sende- und Empfangsfasern sind Lichtwellenleiter, wobei die Sendefaser zum Aussenden von Licht an einem Ende der Faser verwendet wird, das am anderen Ende von einer Lichtquelle (beispielsweise einem Laser) eingespeist wird. Eine Empfangsfaser zum Empfangen von Licht leitet das an einem Ende der Faser einfallende Licht an das andere Ende weiter, wo die Faser mit einer Auswerteeinheit verbunden ist, ggf. kann ein Wandler (optoelektrischer oder optoelektronischer Wandler) dazwischen angeordnet sein.

Eine Sendeanordnung weist die Komponenten auf, die zum Betrieb eines oder mehrerer Sender erforderlich sind, d.h. insbesondere mindestens eine Sendefaser zum Aussenden eines Lichtsignals, die mit einer Lichtquelle verbunden oder verbindbar ist. Eine Empfangsanordnung weist die zum Empfangen von am Messobjekt reflektierten Lichtsignalen erforderlichen Komponenten auf, insbesondere mindestens drei Empfänger, die ihrerseits jeweils mindestens eine Empfangsfaser aufweisen. Diese sind in der Regel über einen messtechnischen Anschluss mit einer Wandlungseinheit, beispielsweise einem opto-elektronischen Wandler verbunden, von dem die den reflektierten Lichtsignalen entsprechenden elektronisch auswertbaren Empfangssignale einer Auswerteeinheit, beispielsweise einem Computer, zugeführt werden.

Weist ein Empfänger mehr als eine Empfangsfaser auf, ist die Entfernung des Empfängers zum Sender vorzugsweise dadurch eindeutig festgelegt, dass jede dieser Empfangsfasern die gleiche Entfernung zum Sender aufweist, beispielsweise wenn diese durch den Radius eines Kreises um den Sender gegeben ist. Weisen nicht alle Empfangsfasern dieselbe Entfernung zum Sender auf, ist die Entfernung als ein Mittel der Entfernungen der zu einem Empfänger zugehörigen Empfangsfasern beziehungsweise als Entfernung des Schwerpunkts der Empfangsfläche des Empfängers vom Sender gegeben.

Die bei der Reflexion entstandenen N reflektierten Lichtsignale ergeben sich daraus, dass vom reflektierten Licht durch die N Empfänger N verschiedene Anteile empfangen werden. N steht für eine natürliche Zahl, also eine positive, ganze Zahl. Der Begriff "zugehörig" bezieht sich auf die Zugehörigkeit eines empfangenen reflektierten Lichtsignals zu jeweils einem bestimmten von den Empfängern.

Auch wenn meist die empfangenen reflektierten Signale von einer Fläche des Messobjekts ausgehen, können in anderen Ausführungsformen voneinander unterschiedliche Flächen des Messobjekts verwendet werden, wie etwa Stirn-, Seiten- und Umfangsflächen, insofern für diese Empfänger und Sender in mindestens einem Zustand durch Bestrahlung oder Abschattung eine Signaländerung registrieren bzw. verursachen können. Hierzu kann eine dreidimensionale Verteilung von Sendern und Empfängern vorgesehen sein.

In einer Ausführungsform weisen einer oder mehrere der N Empfänger jeweils höchstens 2 Empfangsfasern auf. Dadurch wird die Anzahl der insgesamt in der Empfängeranordnung verwendeten Lichtwellenleiter stark begrenzt bzw. herabgesetzt und insbesondere die Möglichkeit eröffnet, statt eines Bündels von Lichtwellenleitern zu einer Sonde bzw. einem Sondenkörper zusammenzufassen, eine flachere Anordnung zu realisieren, die ggf. auch an die baulichen Besonderheiten des Messaufbaus angepasst sein kann. Insbesondere weist in einer Ausführungsform jeder Empfänger lediglich eine Empfangsfaser auf. So kann auch die Anzahl an für die Empfangsanordnung realisierbaren Empfangsfasern für die größtmögliche Anzahl an Empfängern und somit auch Möglichkeiten der Berechnung von möglichst vielen Relativempfangssignalen maximiert werden.

In einer bevorzugten Ausführungsform sind alle Empfangsfasern des einen oder der mehreren der N Empfänger mit jeweils höchstens 2 Empfangsfasern derart angeordnet, dass die zugehörigen Empfänger eine Lineareinheit bzw. Linear-Empfängereinheit oder linearen Empfängervektor bilden. Ähnlich den Kabeln in einem Flachbandkabel sind die Empfangsfasern der Empfänger mit nicht mehr als zwei Empfangsfasern nebeneinander anordenbar. Bei gleichmäßiger Verteilung entsteht ein Zeilenvektor. Es kann jedoch jede eindimensionale Verteilung der Empfänger verwendet werden. Besonders im Hochtemperaturbereich, beispielsweise bei Gasturbinen, ist eine Reduktion der Anzahl von verwendeten Lichtwellenleitern aus Kostengründen vorteilhaft. Ebenso wird die Anwendbarkeit bei komplexen Verlegungen mit meist geringen Leitungsdurchmessern durch die Verwendung einer so geringen Anzahl von Lichtwellenleitern deutlich verbessert.

In einer weiteren Ausführungsform der faseroptische Sensorvorrichtung sind die N Empfänger zumindest teilweise in unterschiedlichen Abständen zu ihren jeweils benachbarten Empfängern angeordnet sind. Auf diese Weise kann auch mit einer reduzierten Anzahl von verwendeten Empfangsfasern die Anordnung der Empfänger optimal an den gewünschten Messbereich angepasst werden. Insbesondere ist es möglich, die Abstände zwischen benachbarten, aber weiter vom Sender entfernten Empfängern größer zu wählen.

Der Begriff "benachbart" bezeichnet bei linearer Anordnung einen tatsächlichen Nachbar, also den jeweils in einer Richtung im geringsten Abstand zu einem Empfänger angeordneten anderen Empfänger. Aber beispielsweise bei Anordnung auf Ringen um den Sender sind die Empfänger zueinander benachbart, bei denen die Entfernung zum Sender, also der Radius auf dem sie liegen, jeweils der nächstgrößere/-kleinere ist, wobei der Abstand sich in diesem Fall auf die Differenz der Radien bezieht. Dies gilt auch, wenn die Ringe spärlich mit Empfangsfasern besetzt sind, aber eben nicht linear angeordnet sind.

In einer Ausführungsform weist zumindest einer der Empfänger eine andere Anzahl von Empfangsfasern als die übrigen Empfänger auf. So kann die Empfängeranordnung an die örtlich verfügbare Intensität der reflektierten empfangenen Lichtstrahlen angepasst werden. So können beispielsweise Empfänger mit einer gegenüber den näher am Sender angeordneten Empfängern erhöhten Anzahl von Empfangsfasern ausgestattet werden, um auch bei reduzierter Intensität der reflektierten empfangenen Lichtstrahlen ein akzeptables Empfangssignal zu erhalten.

In einer bevorzugten Ausführungsform umfasst die faseroptische Sensorvorrichtung eine Wandlungseinheit und eine Auswerteeinheit, wobei
- die Wandlungseinheit Mittel umfasst, die N empfangenen ersten reflektierten Lichtsignale in N entsprechende erste Empfangssignale umzuwandeln und
- die Auswerteeinheit Mittel umfasst, um aus den N ersten Empfangssignalen mindestens 2 erste Relativempfangssignale zu bestimmen, bei denen jeweils eines der N ersten Empfangssignale zu mindestens einem der übrigen N-1 ersten Empfangssignale in Beziehung gesetzt ist.

Meist handelt es sich bei der Wandlungseinheit um einen oder mehrere opto-elektronische Wandler, beispielsweise Fotodioden, die die empfangenen reflektierten Lichtsignale in entsprechende elektrische bzw. elektronische Signale umsetzen, die eine automatisierte Auswertung erlauben. Prinzipiell kann ein Lichtsignal jedoch auch in eine andere auswertbare Form umgewandelt werden, beispielsweise eine akustische.

Ein Empfangssignal, das zu einem anderen Empfangssignal in Beziehung gesetzt ist, kann insbesondere ein Signal sein, dessen Wert bzw. Pegel für jeden gemessenen Abstand durch den Wert des anderen Signals an dem gemessenen Abstand geteilt wird. Da sich beispielsweise die Abhängigkeiten der Empfangssignale, d.h. der Empfangsmesssignale, von der Reflektivität des Messobjekts ähneln oder identisch sind, kann somit die Abhängigkeit des erzeugten Relativempfangssignals von der Reflektivität des Messobjekts kompensiert, also stark verringert oder eliminiert werden.

Es werden mindestens zwei, vorzugsweise aber mehr, insbesondere N-1 Relativempfangssignale erzeugt, auch wenn N größer als 3 gewählt wird.

In der Auswertung besteht somit nicht nur eine Kompensationsmöglichkeit sondern N-1 Kompensationen mit gleicher Basis und gleichem Sender, die jeweils einen optimalen Messbereich besitzen. Die jeweilige Kompensation ist ein Relativsignal bzw. Relativempfangssignal eines Empfängers bezogen auf das Signal eines anderen Empfängers. Die entsprechenden Relativsignale kompensieren jeweils die Reflektivität des Targets bzw. Messobjekts, als auch Schwankungen der Lichtquelle und die Ankopplung der Lichtquelle an die Sendefasern. Beispielsweise können für vier Empfänger und einen Sender auf Empfänger 1 bezogenen Relativempfangssignale bestimmt werden: E2/E1, E3/E1, E4/E1.

Des Weiteren können bei geeigneter Wahl der entsprechenden Entfernungen zwischen den Empfängern und dem Sender die kompensierten Signale, d.h die Relativempfangssignale, überlagert werden, so dass eine Redundanz mit entsprechender Steigerung der Aussagesicherheit der Messung und damit auch eine Steigerung der Messgenauigkeit erzielt werden kann. Dabei gilt: Gesamtunsicherheit = 1/(redundante Anzahl) ^0.5 *Einzelunsicherheit.

Hierdurch lassen sich ggf. auch folgende Unsicherheiten und Einflussfaktoren bestimmen und können entsprechend in der Auswertung berücksichtigt werden: Transmissionsgüte des Empfängers als eine Funktion der Lichtwellenlänge und Ankopplung des jeweiligen Empfängers an die Wandlungseinheit.

In einer bevorzugten Ausführungsform zeichnet sich die faseroptische Sensorvorrichtung außerdem dadurch aus, dass
- die Sendeanordnung mindestens einen zweiten Sender zum Aussenden mindestens eines zweiten Lichtsignals umfasst und
- zumindest ein Teil der N Empfänger dazu eingerichtet ist, außerdem jeweils ein zugehöriges von N bei Reflexion des mindestens einen zweiten Lichtsignals an dem Messobjekt entstehenden zweiten reflektierten Lichtsignalen zu empfangen.

Auf diese Weise wird es ermöglicht, die Anzahl der möglichen auswertbaren Empfangssignale und daraus erzeugbaren Relativempfangssignale weiter zu erhöhen und so die Kompensation von Einflüssen auf das Messergebnis weiter zu verbessern. Es können insbesondere auch noch mehr als zwei Sender verwendet werden. Empfänger, die neben dem ersten auch mindestens ein zweites reflektiertes Lichtsignal empfangen können, empfangen die Signale beispielsweise zeitlich versetzt. Jedoch sind auch andere Zuordnungsmechanismen der ersten und zweiten reflektierten Lichtsignale zu den Sendern möglich.

In einer bevorzugten Ausführungsform sind beispielsweise der erste und der zweite Sender dazu eingerichtet, das erste und das zweite Lichtsignal synchron, also zeitgleich, auszusenden, wobei das erste und das zweite Sendesignal unterschiedliche Wellenlängen aufweisen. Werden Sender verwendet, die Licht in unterschiedlichen Frequenzbereichen ausstrahlen, werden die Empfänger dazu ausgelegt, Licht in mehreren Frequenzbereichen zu empfangen.

Bevorzugt werden nicht nur mehr Empfangssignale, sondern insbesondere auch mehr Relativempfangssignale erzeugt und ausgewertet. Daher zeichnet sich in einer Ausführungsform die faseroptische Sensorvorrichtung dadurch aus, dass
- die Wandlungseinheit außerdem Mittel umfasst, die empfangenen zweiten reflektierten Lichtsignale in entsprechende zweite Empfangssignale umzuwandeln und
- die Auswerteeinheit außerdem Mittel umfasst, um aus den zweiten Empfangssignalen mindestens ein zweites Relativempfangssignal zu bestimmen, bei dem jeweils eines der zweiten Empfangssignale zu mindestens einem der übrigen zweiten Empfangssignale in Beziehung gesetzt ist.

Werden beispielsweise alle N zweiten reflektierten Lichtsignale von jeweils einem der N Empfänger empfangen, stehen zusätzlich N Empfangssignale zur Verfügung, ansonsten mindestens 2, aus denen das mindestens eine zweite Relativempfangssignal bestimmt werden kann.

In einer weiteren Ausführungsform, in der die faseroptische Sensorvorrichtung mindestens einen zweiten Sender aufweist, ist vorgesehen, dass mindestens einer der Sender schaltbar ist. So können die Empfänger zuordenbare, zeitlich getrennte, andere Empfangssignale liefern, je nachdem von welchem Sender oder welcher Kombination von Sendern gerade reflektierte Signale empfangen werden.

Anstelle oder zusätzlich zum Vorsehen eines oder mehrerer zusätzlicher Sender ist in einer weiteren Ausführungsform vorgesehen, dass mindestens der erste Sender eingerichtet ist, mindestens ein weiteres Lichtsignal auszusenden. Das weitere Lichtsignal unterscheidet sich in einem das Lichtsignal charakterisierenden Parameter, beispielsweise seiner Wellenlänge, von dem ersten ausgesendeten Lichtsignal. Auf diese Weise kann die Funktionalität eines zweiten Senders realisiert werden, der örtlich an derselben Stelle wie der erste angeordnet ist.

In einer weiteren Ausführungsform der faseroptischen Sensorvorrichtung ist es vorgesehen, dass die Sendeanordnung und die Empfangsanordnung Mittel umfassen, um eine Empfangsfunktionalität von mindestens einem der Empfänger in eine Sendefunktionalität zu ändern. Beispielsweise kann dies auch alle Empfänger betreffen, jeder Empfänger also auch mit einer Lichtquelle verbunden werden und so auch als Sender eingesetzt werden kann. Zusätzlich kann auch vorgesehen sein, dass auch der Sender in einen Empfänger umgeschaltet werden kann. So kann die Anzahl der möglichen Permutationen, also der Möglichkeiten, eine große Anzahl von auswertbaren Empfangssignalen und damit auch reflexionskompsensierten Relativempfangssignalen zu erzeugen, erhöht werden, um so beispielsweise die Messgenauigkeit zu erhöhen.

Durch den Wechsel der Basis und des Senders bestehen N verschiedene Basen. Durch den Wechsel des Senders bestehen M verschiedene Permutation. Hierdurch können bis zu insgesamt M*(N-1)*N + N*(M-1) verschiedene, linear unabhängige, kompensierte Signale, d.h. Relativempfangssignale, mit jeweils einem optimalen Messbereich bestimmt werden. P entspricht der Anzahl der gleichzeitig vorliegenden Permutationen: Beispielsweise ist für drei Empfänger und einen Sender P=3 mit den Relativempfangssignalen E2/E1, E3/E1 und E3/E2. In einem anderen Beispiel gilt für 3 Empfangsfasern, 6 opto-elektronische Wandler und 2 Sender mit unterschiedlicher Lichtwellenlänge: P=9 mit E21/E11, E31/E11 und E31/E21 sowie E22/E12, E32/E12 und E32/E22 und die gleichen Empfangsfasern mit unterschiedlichem Anschluss: E11/E12, E21/E22 und E31/E32.

Im Falle von schaltbaren Sendern, sei es durch das Verstellen eines Senders oder dem Umschalten oder Hinzuschaltens von Sendern oder dem Wechsel zwischen Sendefasern und Empfangsfasern, kommen zeitlich getrennte, seriell aufgezeichnete Signale als zusätzliche Permutationsmöglichkeiten hinzu: Pz = Z*P + (Z-1)*N, wobei Z = Anzahl der Zustände, Pz = Anzahl der seriellen Permutationen. Beispielsweise gilt für N=3 Empfänger und 1 schaltbaren Sender mit Z=2 Zuständen: P=6 mit möglichen Relativempfangssignalen E21/E11, E31/E11 und E31/E21 sowie E22/E12, E32/E12 und E32/E22 und Pz=12 mit den seriellen Relativempfangssignalen E21/E12, E31/E12 und E31/E22 sowie E21/E12, E31/E12 und E31/E22 und die gleichen Empfänger mit unterschiedlichem Anschluss: E11/E12, E21/E22 und E31/E32.

Die Erfindung wird nachstehend im Zusammenhang mit der folgenden Beschreibung von Ausführungsbeispielen mit Bezug auf die begleitenden Zeichnungen näher erläutert. Es zeigen:
- Fig. 1: eine schematische Darstellung des Funktionsprinzips eines faseroptischen Abstandssensors;
- Fig. 2: eine schematische Darstellung des Aufbaus eines faseroptischen Sensors;
- Fig. 3: eine schematische Darstellung des prinzipiellen Aufbaus eines Sondenkörpers eines faseroptischen Sensors und dessen messtechnischen Anschlusses ohne Kompensation;
- Fig. 4: eine schematische Darstellung des prinzipiellen Aufbaus eines Sondenkörpers eines faseroptischen Sensors und dessen messtechnischen Anschlusses mit Kompensation;
- Fig. 5: einen prinzipiellen Verlauf eines Empfangssignals, das mit einem Sensor mit dem in Fig. 3 gezeigten Sondenkörper aufgenommen wurde;
- Fig. 6: einen prinzipiellen Verlauf eines Empfangssignals, das mit einem Sensor mit dem in Fig. 4 gezeigten Sondenkörper aufgenommen wurde;
- Fig. 7: eine schematische Darstellung eine Ausführungsform einer faseroptischen Sensorvorrichtung gemäß einer Ausführungsform der Erfindung;
- Fig. 8: eine schematische Darstellung eines ersten Beispiels für den Aufbau eines Sondenkörpers einer faseroptischen Sensorvorrichtung und dessen messtechnischen Anschlusses und der Auswertung zur Kompensation gemäß einer Ausführungsform der Erfindung;
- Fig. 9: eine schematische Darstellung eines zweiten Beispiels für den Aufbaus eines Sondenkörpers einer faseroptischen Sensorvorrichtung und dessen messtechnischen Anschlusses und der Auswertung zur Kompensation gemäß einer Ausführungsform der Erfindung;
- Fig. 10: eine schematische Darstellung eines dritten Beispiels für den Aufbau eines Sondenkörpers einer faseroptischen Sensorvorrichtung und dessen messtechnischen Anschlusses und der Auswertung zur Kompensation gemäß einer Ausführungsform der Erfindung;
- Fig. 11: eine schematische Darstellung eines vierten Beispiels für den Aufbau eines Sondenkörpers einer faseroptischen Sensorvorrichtung und dessen messtechnischen Anschlusses und der Auswertung zur Kompensation gemäß einer Ausführungsform der Erfindung;
- Fig. 12: einen beispielhaften Kurvenverlauf von neun Empfangssignalen, aufgenommen mit einer Linear-Empfängereinheit gemäß einer Ausführungsform der Erfindung;
- Fig. 13: einen beispielhaften Kurvenverlauf von sechs Relativempfangssignalen, wobei die zugrundeliegenden Empfangssignale aufgenommen wurden mit einer Linear-Empfängereinheit gemäß einer Ausführungsform der Erfindung;
- Fig. 14: einen weiteren beispielhaften Kurvenverlauf von sechs Relativempfangssignalen, wobei die zugrundeliegenden Empfangssignale aufgenommen wurden mit einer Linear-Empfängereinheit gemäß einer Ausführungsform der Erfindung;
- Fig. 15: eine schematische Darstellung eines fünften Beispiels für den Aufbau eines Sondenkörpers einer faseroptischen Sensorvorrichtung und dessen messtechnischen Anschlusses und der Auswertung zur Kompensation gemäß einer Ausführungsform der Erfindung;
- Fig. 16: eine schematische Darstellung eines sechsten Beispiels für den Aufbau eines Sondenkörpers einer faseroptischen Sensorvorrichtung und dessen messtechnischen Anschlusses und der Auswertung zur Kompensation gemäß einer Ausführungsform der Erfindung;
- Fig. 17: eine schematische Darstellung eines siebten Beispiels für den Aufbau eines Sondenkörpers einer faseroptischen Sensorvorrichtung und dessen messtechnischen Anschlusses und der Auswertung zur Kompensation gemäß einer Ausführungsform der Erfindung;
- Fig. 18: eine schematische Darstellung eines achten Beispiels für den Aufbau eines Sondenkörpers einer faseroptischen Sensorvorrichtung und dessen messtechnischen Anschlusses und der Auswertung zur Kompensation gemäß einer Ausführungsform der Erfindung;
- Fig. 19: eine schematische Darstellung eines neunten Beispiels für den Aufbau eines Sondenkörpers einer faseroptischen Sensorvorrichtung und dessen messtechnischen Anschlusses und der Auswertung zur Kompensation gemäß einer Ausführungsform der Erfindung;
- Fig. 20: eine schematische Darstellung einer ersten weiteren modifizierten Ausführungsform einer faseroptischen Sensorvorrichtung gemäß einer Ausführungsform der Erfindung;
- Fig. 21: eine schematische Darstellung einer zweiten weiteren modifizierten Ausführungsform einer faseroptischen Sensorvorrichtung gemäß einer Ausführungsform der Erfindung; und
- Fig. 22: eine schematische Darstellung einer dritten weiteren modifizierten Ausführungsform einer faseroptischen Sensorvorrichtung gemäß einer Ausführungsform der Erfindung.

In den Figuren sind identische oder ähnliche Elemente mit identischen Bezugszeichen versehen, soweit dies zweckmäßig ist.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der beschriebenen verschiedenen beispielhaften Ausführungsformen miteinander kombiniert werden können, sofern nicht spezifisch anders angegeben. Die Beschreibung ist deshalb nicht in einschränkendem Sinne aufzufassen, und der Schutzumfang der vorliegenden Erfindung wird durch die angefügten Ansprüche definiert.

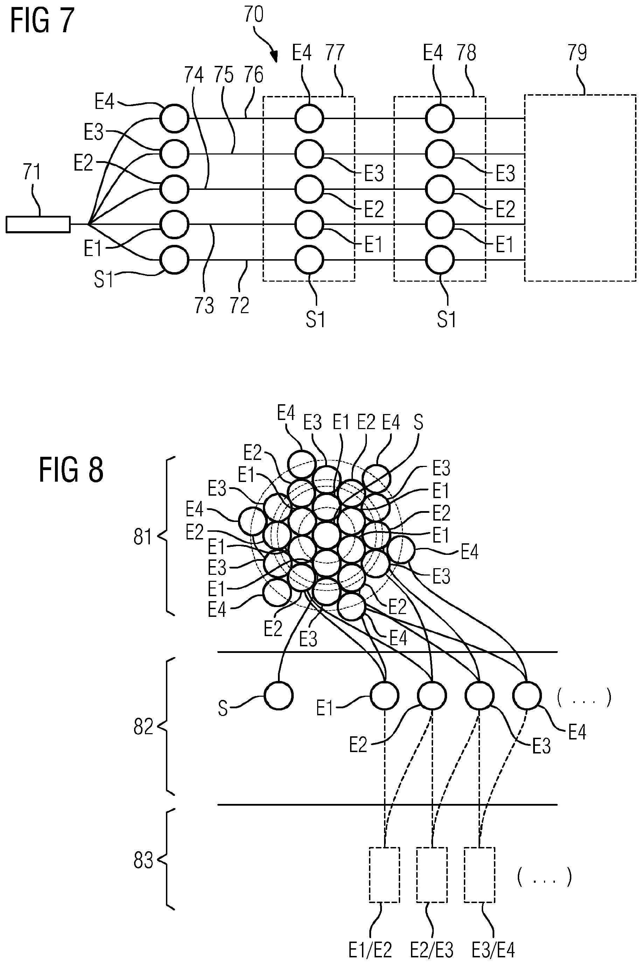

Fig. 7 zeigt eine schematische Darstellung eines Beispiels für eine Ausführungsform einer faseroptischen Sensorvorrichtung. In dem gezeigten Beispiel weist die faseroptische Sensorvorrichtung 70 einen Sondenkörper 71 als Messaufnehmer auf, in dem Sende- und Empfangsfasern geführt sind. Die faseroptische Sensorvorrichtung weist eine Sendeanordnung und eine Empfangsanordnung auf, wobei im gezeigten Beispiel die Sendeanordnung einen Sender S1 zum Aussenden eines Lichtsignals aufweist, der eine Sendefaser 72 umfasst. In anderen Ausführungsformen können mehr als ein Sender bzw. mehr als eine Sendefaser vorgesehen sein. Die Empfangsanordnung weist mindestens N=3 Empfänger auf. In dem gezeigten Beispiel sind es N=4: E1, E2, E3, E4. Jeder der Empfänger weist mindestens eine Empfangsfaser 73, 74, 75, 76 auf. Die N Empfänger sind jeweils in einer anderen Entfernung zu dem ersten Sender angeordnet als die jeweils übrigen N-1 Empfänger und dazu eingerichtet, ein jeweils zugehöriges von N bei Reflexion des mindestens einen ersten Lichtsignals an einem Messobjekt entstehenden ersten reflektierten Lichtsignalen zu empfangen.

Ein messtechnischer Anschluss 77 verbindet die Sendefaser mit einer Lichtquelle (nicht gezeigt), beispielsweise einer Laserlichtquelle, und mit einer Wandlungseinheit 78, meist einem opto-elektronischen Wandler, beispielsweise einer oder mehrerer Fotodioden, der die Lichtsignale in korrespondierende elektrische oder elektronische Signale umwandelt, die dann von einer Auswerteeinheit 79, beispielsweise einem Computer oder anderem Datenverarbeitungsgerät, ausgewertet werden. Die Auswerteeinheit kann auch Mittel für eine Datenspeicherung aufweisen.

Fig. 8 zeigt eine schematische Darstellung eines ersten Beispiels für den Aufbau eines Sondenkörpers 81 einer faseroptischen Sensorvorrichtung im Querschnitt und dessen messtechnischen Anschlusses und der Auswertung zur Kompensation 83 gemäß einer Ausführungsform der Erfindung. Im gezeigten Beispiel sind um einen Sender S mit einer Sendefaser konzentrisch von innen nach außen zunächst mehrere Empfangsfasern eines ersten Empfängers E1 und eines zweiten Empfängers E2 angeordnet. Zusätzlich sind weitere Empfangsfasern eines dritten Empfängers E3 vorgesehen, im gezeigten Beispiel darüber hinaus weitere Empfangsfasern eines vierten Empfängers E4. In der gezeigten Ausführungsform sind die Sende- und Empfangsfasern mit einem messtechnischen Anschluss 82 verbunden, wobei die reflektierten empfangenen Lichtsignale über eine nicht gezeigte Wandlungseinheit einer Auswertung 83 zugeführt werden. Diese bestimmt zumindest die Kompensationssignale oder aufeinander bezogenen Relativempfangssignale für die Empfänger E1, E2, E3 und E4, die hier mit E1/E2, E2/E3 und E3/E4 bezeichnet werden, wobei beispielsweise der Quotient E1/E2 für das berechnete Relativempfangssignal steht, das durch Division der Werte bzw. Pegel eines Empfangssignals, das entsprechend dem reflektierten Lichtsignal generiert wurde, das vom Empfänger E1 empfangen wurde, und eines Empfangssignals ermittelt wird, das entsprechend dem reflektierten Lichtsignal generiert wurde, das vom Empfänger E2 empfangen wurde.

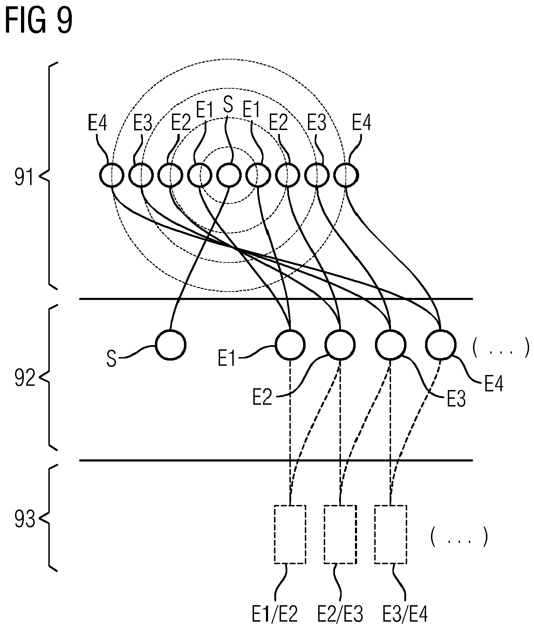

Fig. 9 zeigt eine schematische Darstellung eines zweiten Beispiels für den Aufbau eines Sondenkörpers und dessen messtechnischen Anschlusses und der Auswertung zur Kompensation gemäß einer Ausführungsform der Erfindung. Genau wie in der in Fig. 8 gezeigten Ausführungsform zeigt ein Schnitt durch den Sondenkörper 91 einen Sendekanal bzw. Sender S und vier Empfangskanäle bzw. Empfänger E1, E2, E3 und E4. Allerdings ist hier eine Ausführung der Empfänger nur mit jeweils zwei Empfangsfasern vorgesehen, die wie in Fig. 8 mit einem messtechnischen Anschluss 92 verbunden sind und es zulassen, bei der Auswertung 93 zur Kompensation beispielsweise die Relativempfangssignale E1/E2, E2/E3 und E3/E4 zu bestimmen. So kann ebenfalls ein großer Messbereich überwacht werden und die gleiche Anzahl an Relativempfangssignalen zur Kompensation erzeugt werden, ohne jedoch dieselbe Anzahl an Empfangsfasern vorzusehen, so dass die Kosten des Sensors reduziert werden. In der dargestellten Ausführungsform bilden die Empfänger einen linearen Empfängervektor mit einem zentralen Sender und vier Empfängern bzw. Empfangskanälen.

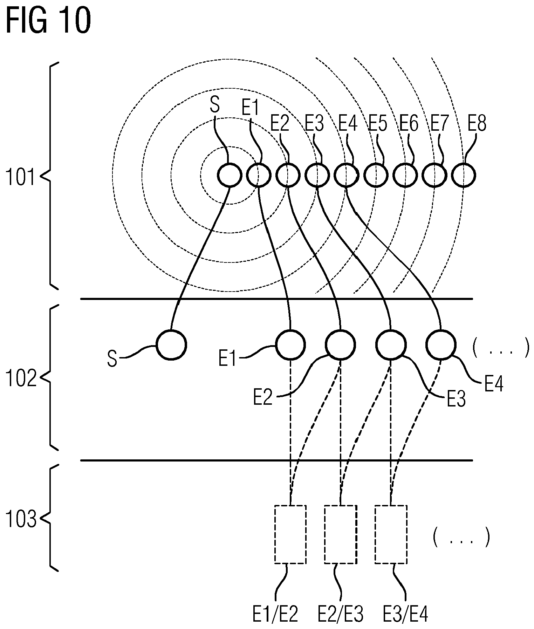

Fig. 10 zeigt eine schematische Darstellung eines dritten Beispiels für den Aufbau eines Sondenkörpers einer faseroptischen Sensorvorrichtung und dessen messtechnischen Anschlusses und der Auswertung zur Kompensation gemäß einer Ausführungsform der Erfindung. In dem gezeigten Beispiel umfasst der Sondenkörper 101 einen Sender S und acht Empfänger E1, E2, E3, E4, E5, E6, E7 und E8, die mit einem messtechnischen Anschluss 102 verbunden sind und bei der Auswertung 103 zur Kompensation die Bestimmung von beispielsweise 7 Relativempfangssignalen E1/E2, E2/E3, E3/E4, E4/E5, E5/E6, E6/E7 und E7/E8 ermöglichen, von denen die ersten vier in Fig. 10 berücksichtigt sind. Wie in Fig. 9 gezeigt, bilden die Empfänger zusammen mit dem Sender eine Lineareinheit mit äquidistanten Empfängern oder Empfangskanälen, hier jedoch mit nur jeweils einer Empfängerfaser. Dazu ist der Sender seitlich angeordnet, so dass gegenüber dem in Fig. 9 dargestellten Aufbau der Messbereich bei gleicher Anzahl an benötigten Empfangsfasern vergrößert ist.

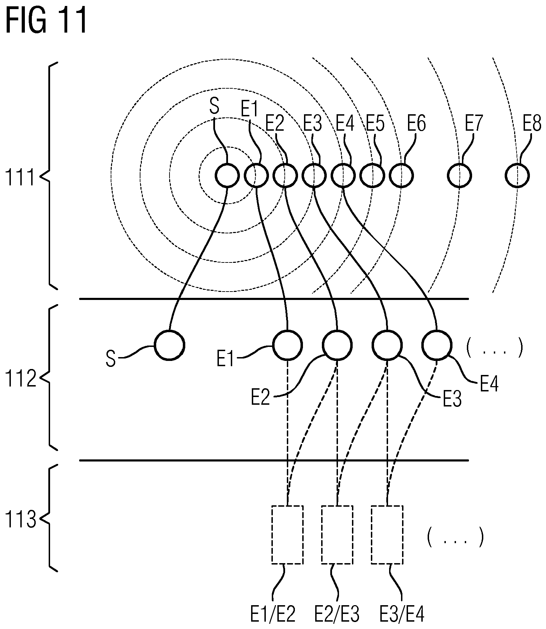

Fig. 11 zeigt eine schematische Darstellung eines vierten Beispiels für den Aufbau eines Sondenkörpers einer faseroptischen Sensorvorrichtung und dessen messtechnischen Anschlusses und der Auswertung zur Kompensation gemäß einer Ausführungsform der Erfindung. Genau wie bei dem in Fig. 10 gezeigten Beispiel umfasst im gezeigten vierten Beispiel der Sondenkörper 111 einen Sender S und acht Empfänger E1, E2, E3, E4, E5, E6, E7 und E8, die mit einem messtechnischen Anschluss 112 verbunden sind und bei der Auswertung 113 zur Kompensation die Bestimmung von beispielsweise 7 Relativempfangssignalen E1/E2, E2/E3, E3/E4, E4/E5, E5/E6, E6/E7 und E7/E8 ermöglichen, von denen die ersten vier in Fig. 11 berücksichtigt sind. Wie in der Fig. 10 gezeigt, bilden die Empfänger zusammen mit dem Sender eine Lineareinheit mit seitlich angeordnetem Sender, so dass auch hier die Anzahl der als Empfängerfasern verwendeten Lichtwellenleiter optimal reduziert ist. Allerdings sind hier die Empfänger nicht äquidistant zueinander angeordnet, sondern die gewählten Abstände zwischen den Empfängern sind zur optimierten Anpassung an einen geforderten Messbereich verändert.

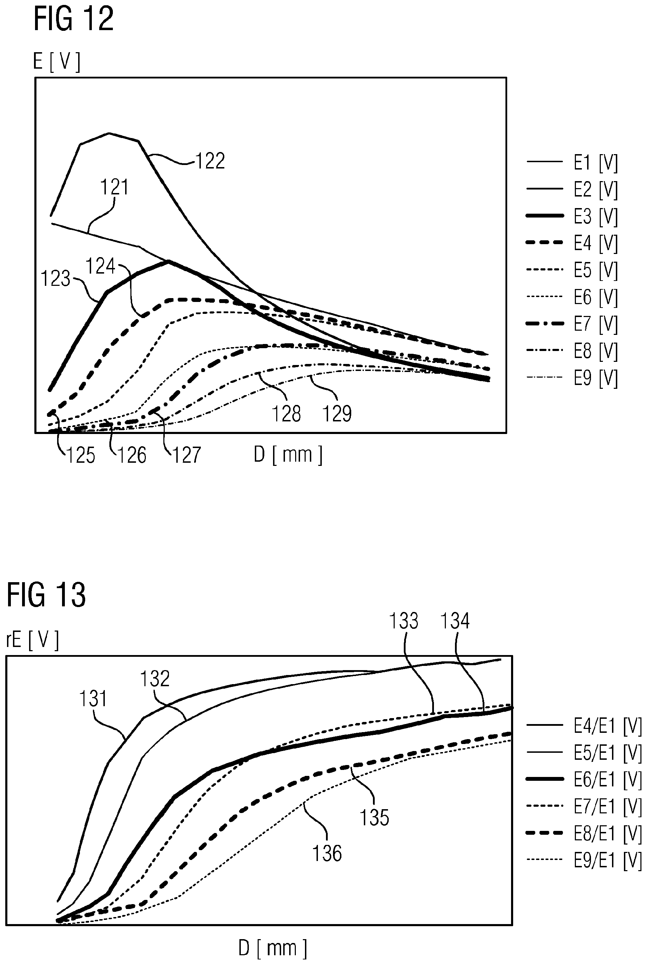

Fig. 12 zeigt in einem Diagramm, in dem für gemessene Abstände bzw. Distanzen D Empfangssignalpegel E angegeben sind, beispielhafte Funktionsverläufe von neun Empfangssignalen 121, 122, 123, 124, 125, 126, 127, 128, 129, aufgenommen mit einer Linear-Empfängereinheit, wie sie (für 8 Empfangssignale) beispielhaft in Fig. 10 gezeigt wurde, wobei Empfangssignal 121 von Empfänger E1, Empfangssignal 122 von Empfänger E2, Empfangssignal 123 von Empfänger E3, Empfangssignal 124 von Empfänger E4, Empfangssignal 125 von Empfänger E5, Empfangssignal 126 von Empfänger E6, Empfangssignal 127 von Empfänger E7, Empfangssignal 128 von Empfänger E8 und Empfangssignal 129 von Empfänger E9 empfangen wurden.

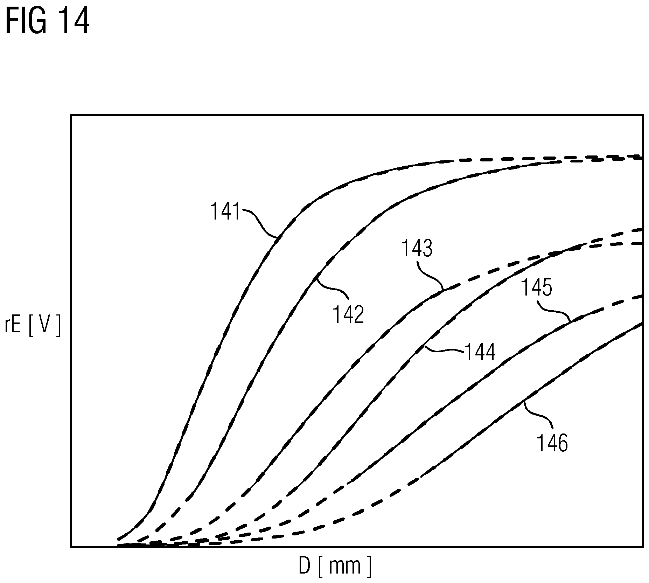

Fig. 13 zeigt in einem Diagramm, in dem für gemessene Abstände bzw. Distanzen D Relativempfangssignalpegel rE angegeben sind, beispielhafte Kurvenverläufe von sechs Relativempfangssignalen, wobei die zugrunde liegenden Empfangssignale aufgenommen wurden mit einer Linear-Empfängereinheit entsprechend der in Fig. 9 gezeigten. Als Relativempfangssignale bzw. Relativsignale wurden Verhältnisse aus weiter entfernten Empfängern zu näher zum Sender liegenden Empfängern bestimmt, wobei Empfänger E1 die geringste Entfernung zum Sender aufweist, Empfänger E9 die weiteste. Die Kurve 131 zeigt das Relativempfangssignal E4/E1, die Kurve 132 zeigt das Relativempfangssignal E5/E1, die Kurve 133 zeigt das Relativempfangssignal E6/E1, die Kurve 134 zeigt das Relativempfangssignal E7/E1, die Kurve 135 zeigt das Relativempfangssignal E8/E1 und die Kurve 136 zeigt das Relativempfangssignal E9/E1. Die Relativempfangssignale kompensieren den Einfluss unterschiedlicher Helligkeiten oder Intensitäten der empfangenen reflektierten Lichtsignale aufgrund von schwankender Laser-Leistung, unterschiedlichen Oberflächenhelligkeiten und Veränderungen der Reflexionseigenschaften der Oberfläche des Messobjekts. Fig. 14 zeigt in einem Diagramm, in dem für gemessene Abstände bzw. Distanzen D Relativempfangssignalpegel rE angegeben sind, weitere beispielhafte Kurvenverläufe von sechs Relativempfangssignalen, wobei die zugrunde liegenden Empfangssignale aufgenommen wurden mit einer Linear-Empfängereinheit entsprechend der in Fig. 9 gezeigten. Die Kurve 141 zeigt das Relativempfangssignal E2/E1, die Kurve 142 zeigt das Relativempfangssignal E3/E2, die Kurve 143 zeigt das Relativempfangssignal E4/E3, die Kurve 144 zeigt das Relativempfangssignal E5/E4, die Kurve 145 zeigt das Relativempfangssignal E6/E5 und die Kurve 146 zeigt das Relativempfangssignal E7/E6. Bereiche der Kurven, in denen ein anderer Abstand zum Messobjekt auch zu einer auswertbaren Veränderung der Relativempfangssignalstärke führt, die sich daher für eine Zuordnung der nutzbaren, relativen Signale zu dem jeweiligen Abstand besonders eignen, kompensiert bezüglich Veränderungen der Senderleistung, Reflektivität und Färbung der Oberfläche, sind dabei jeweils mit durchgezogenen Linien dargestellt. Es kann ein gegenüber nicht kompensierten Absolut-Empfangssignalen erweiterter Messbereich genutzt werden, wobei für dieselben Abstände redundante Informationen mehrerer verschiedener Relativempfangssignale zur Verfügung stehen.

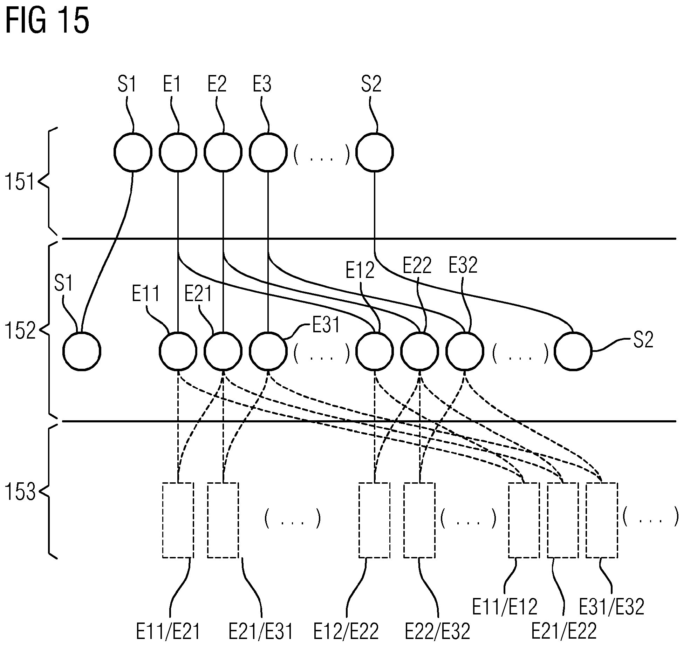

Fig. 15 zeigt eine schematische Darstellung eines fünften Beispiels für den Aufbau eines Sondenkörpers einer faseroptischen Sensorvorrichtung und dessen messtechnischen Anschlusses und der Auswertung zur Kompensation gemäß einer Ausführungsform der Erfindung. Anders als in den vorangegangenen Beispielen umfasst im gezeigten fünften Beispiel der Sondenkörper 151 zwei Sender S1 und S2 und zumindest drei Empfänger E1, E2 und E3, die mit einem messtechnischen Anschluss 152 verbunden sind. Durch die Verwendung von zwei Sendern liefern die Empfänger (nach entsprechender Filterung) bezüglich Sender S1 beispielsweise mindestens Empfangssignale E11, E21 und E31, bezüglich Sender S2 beispielsweise mindestens Empfangssignale E12, E22 und E32, so dass bei der Auswertung 153 zur Kompensation die synchrone, parallele Bestimmung von beispielsweise 7 Relativempfangssignalen E11/E21, E21/E31, E12/E22, E22/E32, E11/E12, E21/E22 und E31/E32 ermöglicht wird. Wie in Fig. 15 gezeigt, bilden die Empfänger zusammen mit den Sendern im gezeigten Beispiel eine Lineareinheit mit zwei seitlich angeordneten Sendern, so dass auch hier die Anzahl der als Empfängerfasern verwendeten Lichtwellenleiter optimal reduziert ist. Realisiert werden die beiden Sender beispielsweise mit zwei synchronen, parallel geschalteten Sendern, die je eine Sendefaser umfassen und die Licht z.B. in verschiedenen Lichtwellenlängen ausstrahlen.

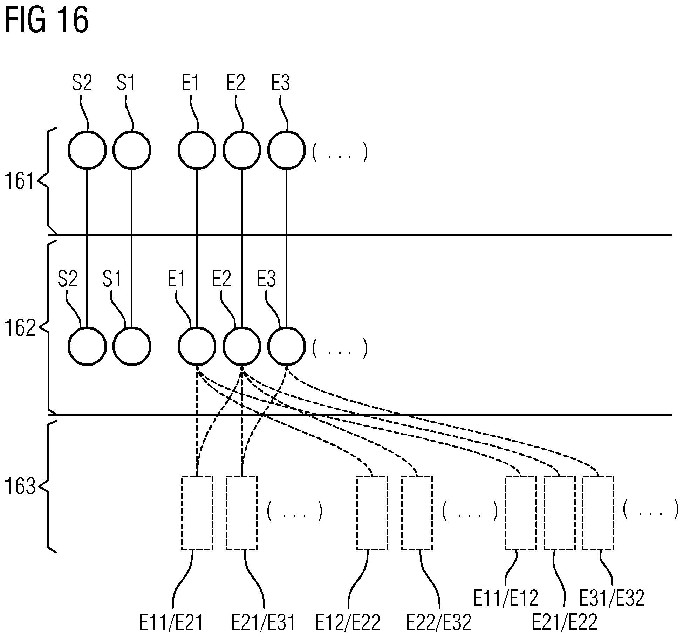

Fig. 16 zeigt eine schematische Darstellung eines sechsten Beispiels für den Aufbau eines Sondenkörpers einer faseroptischen Sensorvorrichtung und dessen messtechnischen Anschlusses und der Auswertung zur Kompensation gemäß einer Ausführungsform der Erfindung. Genau wie im fünften Beispiel, das in Fig. 15 gezeigt ist, umfasst im gezeigten sechsten Beispiel der Sondenkörper 161 zwei Sender S1 und S2 und zumindest drei Empfänger E1, E2 und E3, die mit einem messtechnischen Anschluss 162 verbunden sind. Hier ist keine Filterung notwendig, um die von den Empfängern empfangenen Signale einem der Sender zuordnen zu können, da die Sender schaltbar vorgesehen sind und beispielsweise mit verschiedenen Leistungen bzw. Intensitäten senden. Durch die Verwendung von zwei schaltbaren Sendern liefern die Empfänger mindestens die Empfangssignale E1, E2 und E3, die sich je nach Schaltzustand auf Sender S1 oder S2 beziehen. Bei der Auswertung 163 zur Kompensation können so zum Beispiel die Relativempfangssignale E11/E21 und E21/E31 synchron zu Sender S1, E12/E22 und E22/E32 synchron zu Sender S2, sowie E11/E12, E21/E22 und E31/E32 asynchron zu Sender S1 und S2 bestimmt werden. Wie in Fig. 16 gezeigt, bilden die Empfänger zusammen mit den Sendern im gezeigten Beispiel eine Lineareinheit mit zwei seitlich au derselben Seite angeordneten Sendern, so dass auch hier die Anzahl der als Empfängerfasern verwendeten Lichtwellenleiter optimal reduziert ist. Das gleiche Prinzip kann auch angewendet werden, wenn Sender S1 verstellt werden kann und sich durch zwei unterschiedliche Einstellungen unterscheidet, beispielsweise bezüglich Leistung bzw. Intensitäten, Lichtwellenlänge oder Winkelverteilung der Intensitäten.

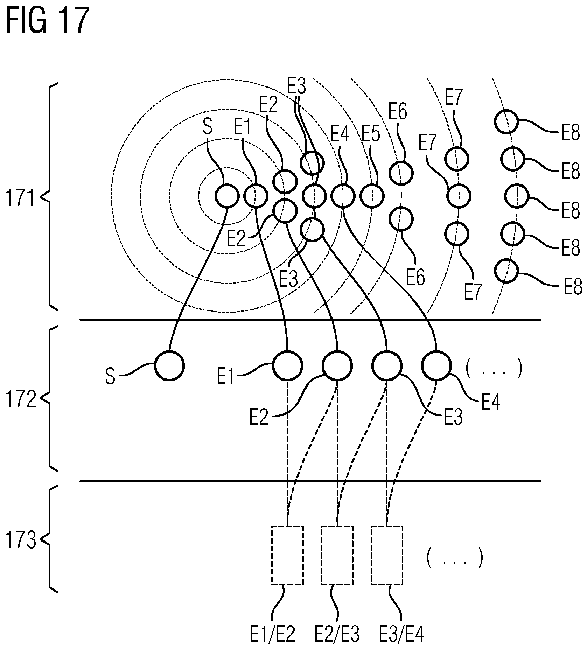

Fig. 17 zeigt eine schematische Darstellung eines siebten Beispiels für den Aufbau eines Sondenkörpers einer faseroptischen Sensorvorrichtung und dessen messtechnischen Anschlusses und der Auswertung zur Kompensation gemäß einer Ausführungsform der Erfindung. In dem gezeigten Beispiel umfasst der Sondenkörper 171 einen Sender S und acht Empfänger E1, E2, E3, E4, E5, E6, E7 und E8, die mit einem messtechnischen Anschluss 172 verbunden sind und bei der Auswertung 173 zur Kompensation die Bestimmung von beispielsweise 7 Relativempfangssignalen E1/E2, E2/E3, E3/E4, E4/E5, E5/E6, E6/E7 und E7/E8 ermöglichen, von denen die ersten drei in Fig. 17 berücksichtigt sind. Die Empfänger weisen unterschiedlich viele Empfangsfasern auf, wodurch die Empfangsanordnung beispielsweise an eine nicht gleich verteilte Empfangsintensität angepasst sein kann.

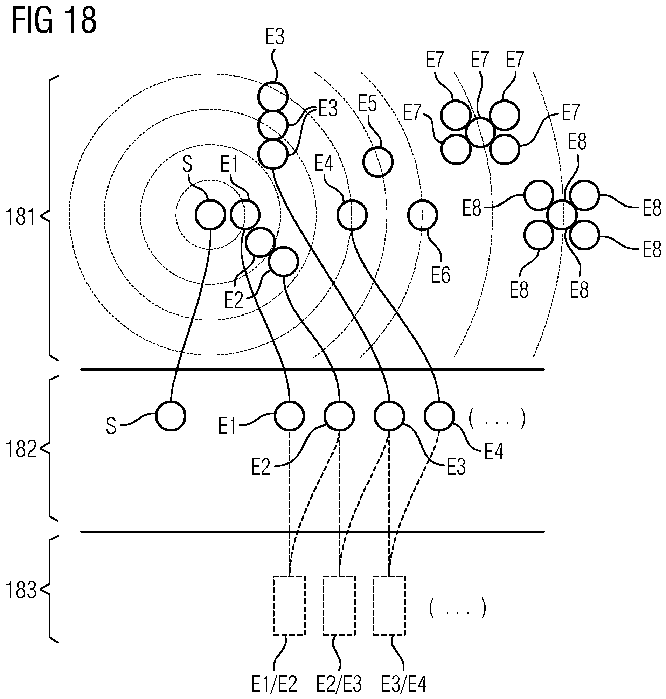

Fig. 18 zeigt eine schematische Darstellung eines achten Beispiels für den Aufbau eines Sondenkörpers einer faseroptischen Sensorvorrichtung und dessen messtechnischen Anschlusses und der Auswertung zur Kompensation gemäß einer Ausführungsform der Erfindung. In dem gezeigten Beispiel umfasst der Sondenkörper 181 einen Sender S und acht Empfänger E1, E2, E3, E4, E5, E6, E7 und E8, die mit einem messtechnischen Anschluss 182 verbunden sind und bei der Auswertung 183 zur Kompensation die Bestimmung von beispielsweise 7 Relativempfangssignalen E1/E2, E2/E3 und E3/E4, E4/E5, E5/E6, E6/E7 und E7/E8 ermöglichen, von denen die ersten drei in Fig. 18 berücksichtigt sind. Die Empfänger weisen unterschiedlich viele Empfangsfasern auf, wobei die Empfangsfasern je Empfänger zweidimensional verteilt sind und die Empfänger unterschiedliche Abstände zueinander aufweisen, wodurch die Empfangsanordnung an eine örtlich nicht gleich verteilte Empfangsintensität oder bauliche Einschränkungen des Messaufbaus angepasst werden kann.

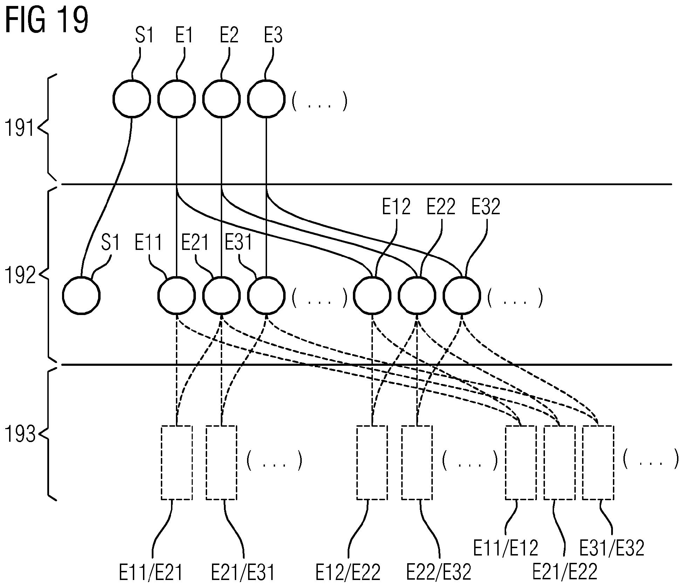

Fig. 19 zeigt eine schematische Darstellung eines neunten Beispiels für den Aufbau eines Sondenkörpers einer faseroptischen Sensorvorrichtung und dessen messtechnischen Anschlusses und der Auswertung zur Kompensation gemäß einer Ausführungsform der Erfindung. Im gezeigten neunten Beispiel umfasst der Sondenkörper 191 einen ggf. verstellbaren Sender S1 mit einer Sendefaser und zumindest drei Empfänger E1, E2 und E3, die mit einem messtechnischen Anschluss 192 mit Kopplung und ggf. Filterung, um die von den Empfängern empfangenen Signale den verschiedenen Sendereinstellungen zuordnen zu können, verbunden sind. Durch die Verwendung eines verstellbaren Senders liefern die Empfänger bei zwei Sendereinstellungen mindestens die Empfangssignale E11, E21 und E31 bezüglich Sendereinstellung 1 und die Empfangssignale E12, E22 und E32 bezüglich Sendereinstellung 2. Bei der Auswertung 193 zur Kompensation können so zum Beispiel die Relativempfangssignale E11/E21 und E21/E31 synchron zu Empfänger 1 ggf. bei Sendereinstellung 1, sowie E12/E22 und E22/E32 synchron zu Empfänger 2, ggf. bei Sendereinstellung 2 parallel bestimmt werden, sowie E11/E12, E21/E22 und E31/E32 synchron zu Empfänger 1 bzw. 2, ggf. asynchron zu Sendereinstellung 1 bzw. 2 seriell bestimmt werden. Die Empfänger bilden zusammen mit dem Sender im gezeigten Beispiel eine Lineareinheit mit einem seitlich angeordneten Sender, so dass auch hier die Anzahl der als Empfängerfasern verwendeten Lichtwellenleiter optimal reduziert ist. Die Sendereinstellungen unterscheiden sich beispielsweise bezüglich Leistung bzw. Intensitäten, Lichtwellenlänge oder Winkelverteilung der Intensitäten.

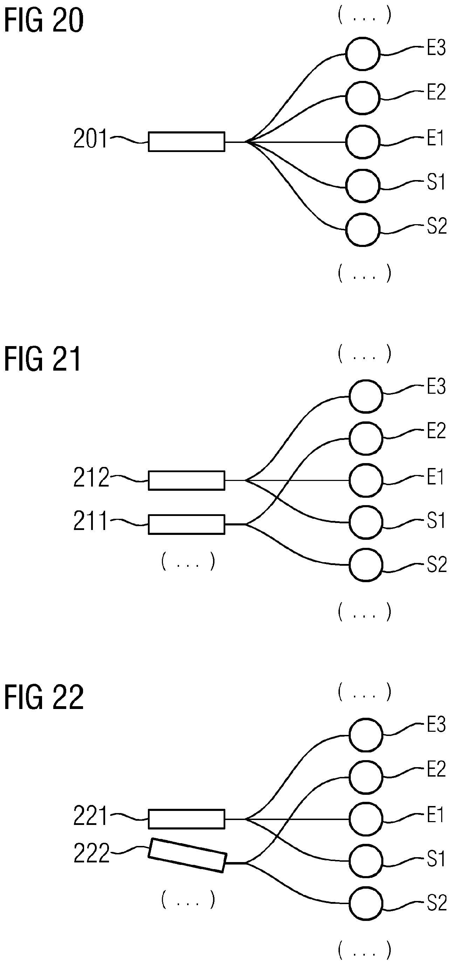

Fig. 20 zeigt eine schematische Darstellung einer ersten weiteren modifizierten Ausführungsform einer faseroptischen Sensorvorrichtung. Ein Sondenkörper 201 umfasst dabei eine Mehrzahl von jeweils eine Sendefaser aufweisende Sender S1, S2, ..., sowie eine Mehrzahl jeweils eine Empfangsfaser aufweisende Empfänger E1, E2, E3, ... Diese Zusammenfassung in einem Sondenkörper ist jedoch nicht zwingend. Fig. 21 zeigt eine schematische Darstellung einer zweiten weiteren modifizierten Ausführungsform einer faseroptischen Sensorvorrichtung. Sender und Empfänger können, beispielsweise aufgrund baulicher Erfordernisse, auf eine Mehrzahl von parallel ausgerichteten Sondenkörpern 211, 212 aufgeteilt sein. Diese Ausrichtung ist jedoch ebenfalls nicht zwingend. Fig. 22 zeigt eine schematische Darstellung einer dritten weiteren modifizierten Ausführungsform einer faseroptischen Sensorvorrichtung. Wie in Fig. 22 können Sender und Empfänger können auf eine Mehrzahl von Sondenkörpern 221, 222 aufgeteilt sein, auch wenn diese beispielsweise aus messtechnischen oder baulichen Gründen nicht parallel zueinander ausgerichtet sind. Es können also mehrere Sondenkörper von der Sensorvorrichtung umfasst sein, die zusammengehören, auch wenn diese räumlich voneinander entfernt angeordnet sind.

Sofern nicht anders angegeben, wurden Begriffe wie "erstes" und "zweites" o.ä. verwendet (beispielsweise erstes und zweites Sendesignal, erster und zweiter Empfänger, etc.), um zwischen den jeweiligen Elementen zu unterscheiden. Die Verwendung der Begriffe impliziert daher nicht zwingend eine temporale oder anderweitige Priorisierung des einen oder anderen Elements.

## Patentansprüche

1. Faseroptische Sensorvorrichtung (70), umfassend eine Sendeanordnung; und
eine Empfangsanordnung; wobei
- die Sendeanordnung einen ersten Sender zum Aussenden mindestens eines ersten Lichtsignals umfasst, wobei der erste Sender mindestens eine Sendefaser (72) aufweist; und
- die Empfangsanordnung mindestens N Empfänger umfasst, wobei jeder der N Empfänger mindestens eine Empfangsfaser (73, 74, 75, 76) aufweist, in einer anderen Entfernung zu dem ersten Sender angeordnet ist als die jeweils übrigen N-1 Empfänger und dazu eingerichtet ist, ein jeweils zugehöriges von N bei Reflexion des mindestens einen ersten Lichtsignals an einem Messobjekt entstehenden ersten reflektierten Lichtsignalen zu empfangen, **dadurch gekennzeichnet, dass** N mindestens 3 ist.

2. Faseroptische Sensorvorrichtung nach Anspruch 1, wobei einer oder mehrere der N Empfänger jeweils höchstens 2 Empfangsfasern aufweisen.

3. Faseroptische Sensorvorrichtung nach Anspruch 2, wobei alle Empfangsfasern des einen oder der mehreren der N Empfänger mit jeweils höchstens 2 Empfangsfasern derart angeordnet sind, dass die zugehörigen Empfänger einen linearen Empfängervektor bilden.

4. Faseroptische Sensorvorrichtung nach einem der Ansprüche 1 bis 3, wobei die N Empfänger zumindest teilweise in unterschiedlichen Abständen zu ihren jeweils benachbarten Empfängern angeordnet sind.

5. Faseroptische Sensorvorrichtung nach einem der Ansprüche 1 bis 4, wobei zumindest einer der Empfänger eine andere Anzahl von Empfangsfasern aufweist als die übrigen Empfänger.

6. Faseroptische Sensorvorrichtung nach einem der Ansprüche 1 bis 5, weiterhin umfassend
eine Wandlungseinheit (78) und
eine Auswerteeinheit (79); wobei
- die Wandlungseinheit (78) Mittel umfasst, die N empfangenen ersten reflektierten Lichtsignale in N entsprechende erste Empfangssignale umzuwandeln; und
- die Auswerteeinheit (79) Mittel umfasst, um aus den N ersten Empfangssignalen mindestens 2 erste Relativempfangssignale zu bestimmen, bei denen jeweils eines der N ersten Empfangssignale zu mindestens einem der übrigen N-1 ersten Empfangssignale in Beziehung gesetzt ist.

7. Faseroptische Sensorvorrichtung nach Anspruch 6, wobei
- die Sendeanordnung mindestens einen zweiten Sender zum Aussenden mindestens eines zweiten Lichtsignals umfasst; und
- zumindest ein Teil der N Empfänger dazu eingerichtet ist, außerdem jeweils ein zugehöriges von N bei Reflexion des mindestens einen zweiten Lichtsignals an dem Messobjekt entstehenden zweiten reflektierten Lichtsignalen zu empfangen.

8. Faseroptische Sensorvorrichtung nach Anspruch 7, wobei der erste und der zweite Sender dazu eingerichtet sind, das erste und das zweite Lichtsignal synchron auszusenden, und das erste und das zweite Sendesignal unterschiedliche Wellenlängen aufweisen.

9. Faseroptische Sensorvorrichtung nach Anspruch 7 oder Anspruch 8, wobei
- die Wandlungseinheit (78) außerdem Mittel umfasst, die empfangenen zweiten reflektierten Lichtsignale in entsprechende zweite Empfangssignale umzuwandeln; und
- die Auswerteeinheit (79) außerdem Mittel umfasst, um aus den zweiten Empfangssignalen mindestens 1 zweites Relativempfangssignal zu bestimmen, bei dem jeweils eines der zweiten Empfangssignale zu mindestens einem der übrigen zweiten Empfangssignale in Beziehung gesetzt ist.

10. Faseroptische Sensorvorrichtung nach einem der Ansprüche 7 bis 9, wobei mindestens einer der Sender schaltbar ist.

11. Faseroptische Sensoranordnung nach einem der Ansprüche 1 bis 10, wobei mindestens der erste Sender eingerichtet ist, mindestens ein weiteres Lichtsignal auszusenden.

12. Faseroptische Sensorvorrichtung nach einem der Ansprüche 1 bis 11, wobei die Sendeanordnung und die Empfangsanordnung Mittel umfassen, um eine Empfangsfunktionalität von mindestens einem der Empfänger in eine Sendefunktionalität zu ändern.
